# EUROPÄISCHE PATENTSCHRIFT

(11) **EP 1 452 859 B1**
(45) Veröffentlichungstag und Bekanntmachung des Hinweises auf die Patenterteilung: **14.04.2010**
(21) Anmeldenummer: 03019971.5
(22) Anmeldetag: 03.09.2003
(51) Int. Cl.: G01N 27/407

(54) **Verfahren und Sensorelement zur Bestimmung eines Gases in einem Gasgemisch**
Method and sensing element for measuring a gas in a gas mixture
Dispositif et procédé de détermination de la concentration d'un gaz dans un melange gazeux

(30) Priorität: 27.02.2003 DE 10308394; 27.02.2003 DE 10308395
(43) Veröffentlichungstag der Anmeldung: 01.09.2004
(73) Patentinhaber: ROBERT BOSCH GMBH, 70442 Stuttgart (DE)
(72) Erfinder: Cramer, Berndt, 71229 Leonberg (DE); Schumann, Bernd, 71277 Rutesheim (DE); Ochs, Thorsten, 71701 Schwieberdingen (DE); Schichlein, Helge, 76137 Karlsruhe (DE); Thiemann-Handler, Sabine, 70435 Stuttgart (DE)

(56) Entgegenhaltungen:
- EP-A- 0 678 740
- WO-A-02/065113
- DE-A- 10 023 062
- DE-A- 10 058 014
- DE-C- 19 851 949
- US-A- 5 893 968
- PATENT ABSTRACTS OF JAPAN vol. 2000, no. 10, 17 November 2000 (2000-11-17) & JP 2000 193639 A (NGK SPARK PLUG CO LTD), 14 July 2000 (2000-07-14)

## Beschreibung

Die Erfindung betrifft ein Verfahren und ein Sensorelement eines Gassensors zur Bestimmung der Konzentration eines Gases in einem Gasgemisch sowie dessen Verwendung nach dem Oberbegriff der unabhängigen Ansprüche.

### Stand der Technik

Im Zuge sich verschärfender Umweltrichtlinien kommt der Sensorik im Bereich der Abgase von Verbrennungsmotoren eine wachsende Bedeutung zu. Dabei werden insbesondere Gassensoren auf Festelektrolytbasis eingesetzt, die hochselektiv die zu detektierenden gasförmigen Bestandteile im Abgas nachweisen. Eine besondere Herausforderung stellt dabei die Konzentrationsbestimmung insbesondere von oxidierbaren Abgasbestandteilen dar, vor allen Dingen dann, wenn der entsprechende Verbrennungsmotor unter sauerstoffreichen Bedingungen betrieben wird. Dies betrifft insbesondere den Nachweis von Kohlenwasserstoffen oder Ammoniak in Abgasen von mit einem Sauerstoffüberschuss betriebenen Verbrennungsmotoren.

Aus der EP 678 740 B1 ist ein Gassensor auf Festelektrolytbasis bekannt, der dem Nachweis von Stickoxiden dient. Das Messprinzip des Sensors beruht darauf, dass innerhalb des Gassensors überschüssiger Sauerstoff ohne Beeinträchtigung der Stickoxidkonzentration entfernt wird, und nach Einstellung einer konstant niedrigen Sauerstoffatmosphäre der Gehalt von Stickoxiden amperometrisch ermittelt wird. Dieser Sensor kann unter anderem auch zur Bestimmung von Wasserstoff oder Ammoniak verwendet werden. Dazu muss der Sensor allerdings eine protonenleitende Festelektrolytschicht aufweisen. Der Einbau einer derartigen Schicht ist aufwändig und die Lebensdauer derselben ist beschränkt.

Demgegenüber liegt der vorliegenden Erfindung die Aufgabe zugrunde, ein Verfahren bzw. ein Sensorelement für einen Gassensor bereitzustellen, das die Bestimmung eines Gases in einem Gasgemisch zuverlässig gewährleistet und dennoch kostengünstig ist Weitere Gassensoren sind aus der US-5 893 968, der DE 198 51 949 und der WO-02 065 113 bekannt.

### Vorteile der Erfindung

Das der Erfindung zugrunde liegende Verfahren bzw. das erfindungsgemäße Sensorelement mit den kennzeichnenden Merkmalen der unabhängigen Ansprüche hat den Vorteil, dass es die Messung oxidierbarer Bestandteile eines Gasgemischs auch in Gegenwart größerer Mengen an Sauerstoff und Stickoxiden gestattet. Dazu wird in vorteilhafter Weise innerhalb des Sensorelements mittels einer Hilfselektrode ein Großteil der vorhandenen Stickoxide reduziert bzw. ein Großteil des vorhandenen Wasserstoffs oder Kohlenmonoxids oxidiert und aus dem Gasgemisch entfernt. Auf diese Weise wird eine genauere Bestimmung des zu detektierenden Gases ermöglicht.

Durch die in den Unteransprüchen aufgeführten Maßnahmen sind vorteilhafte Weiterbildungen und Verbesserungen des in den unabhängigen Ansprüchen angegebenen Verfahrens bzw. Sensorelements möglich. So ist es beispielsweise von Vorteil, wenn in einem ersten Schritt im Gasgemisch enthaltener Sauerstoff bzw. im Gasgemisch enthaltene Stickoxide mittels einer ersten Hilfselektrode des Sensorelements reduziert und zumindest teilweise aus dem Gasgemisch entfernt werden. In einem zweiten Schritt wird mittels einer weiteren Hilfselektrode die Konzentration der im Gasgemisch noch vorhandenen Stickoxide weiter verringert Zusätzlich wird Wasserstoff bzw. Kohlenmonoxid, das sich bei der im ersten Schritt vorgenommenen Reduktion als Nebenprodukt bilden kann, oxidiert, da dieses die Bestimmung insbesondere von oxidierbaren Gasen erschwert. Diese Maßnahmen ermöglichen eine besonders exakte Bestimmung der Konzentration des zu messenden Gases.

Erfindungsgemäß ist die erste Hilfselektrode zweiteilig ausgestaltet, wobei sie einen ersten Bereich aus einem ersten Material mit einer ersten katalytischen Aktivität aufweist sowie einen zweiten Bereich aus einem zweiten Material mit einer zweiten katalytischen Aktivität. Dies ermöglicht den Einsatz stark negativer Potenziale an der ersten Hilfselektrode und somit eine hohe Pumpleistung dieser Elektrode pro Oberflächeneinheit ohne Verlust der Selektivität für die zu entfernenden Gase. Der erste, katalytish inaktivere Bereich ist in Strömungsrichtung des Gasgemischs vor dem zweiten, katalytisch aktiveren Bereich angeordnet.

### Zeichnung

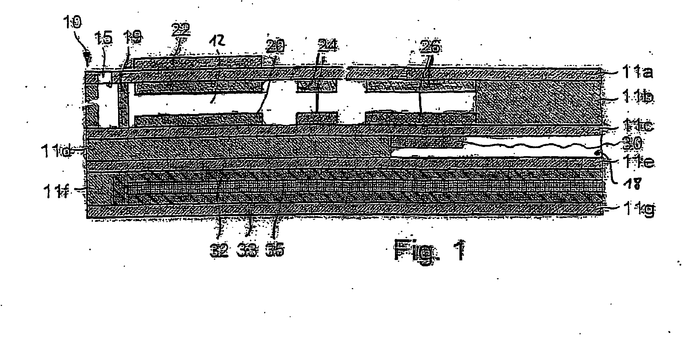

In der einzigen Figur ist ein Ausführungsbeispiel der Erfindung dargestellt und in der nachfolgenden Beschreibung näher erläutert. Figur 1 zeigt einen Querschnitt durch einen messgasseitigen Abschnitt eines erfindungsgemäßen Sensorelements gemäß einem ersten Ausführungsheispiel.

### Ausführungsbeispiel

In Figur 1 ist ein prinzipieller Aufbau einer ersten Ausführungsform der vorliegenden Erfindung dargestellt. Mit 10 ist ein planares Sensorelement eines elektrochemischen Gassensors bezeichnet, das der Bestimmung eines Gases in einem Gasgemischs dient, insbesondere des Gehaltes eines oxidierbaren Gases wie Ammoniak, eines Koblenwasserstoffs, Schwefelwasserstoff, Schwefelmonoxid oder ein Alkylamin, vorzugsweise in Abgasen von Verbrennungsmotoren. Das Sensorelement weist eine Mehrzahl von sauerstoffionenleitenden Festelektrolytschichten 11a, 11b, 11c, 11d, 11e,11f und 11g auf, die beispielsweise als keramische Folien ausgeführt sind und einen planaren keramischen Körper bilden. Sie bestehen aus einem sauentoffionenleitenden Festelektrolytmaterial, wie beispielsweise mit Y₂O₃ stabilisiertem oder teilstabilisiertem ZrO₂. Die Festelektrolytschichten 11a - 11g können alternativ zumindest an Stellen, an denen eine Ionenleitung im Festelektrolyt nicht wichtig oder unerwünscht ist, durch Folien aus Aluminiumoxid ersetzt werden.

Die integrierte Form des planaren keramischen Körpers des Sensorelements 10 wird durch Zusammenlaminieren der mit Funktionsschichten bedruckten keramischen Folien und anschließendes Sintern der laminierten Struktur in an sich bekannter Weise hergestellt.

Das Sensorelement 10 beinhaltet einen inneren Gasraum 12 und Beispielsweise einen Referenzgaskanal 18. Der Referenzgaskanal 18 steht durch einen Gaseinlass, der an einem Ende aus dem planaren Körper des Sensorelements 10 herausführt, in Kontakt mit einer Referenzgasatmosphäre, die beispielsweise durch Umgebungsluft gebildet ist.

Der innere Gasraum 12 weist eine Öffnung 15 auf, die den Kontakt mit dem zu bestimmenden Gasgemisch ermöglicht. Die Öffnung 15 ist in der Festelektrolytschicht 11a senkrecht zur Oberfläche des Sensorelements 10 angebracht, sie kann jedoch auch in der Festelektrolytschicht 11b ausgebildet werden.

Im inneren Gasraum 12 ist eine erste Hilfselektrode 20 in doppelter Ausführung vorgesehen. In Diffusionsrichtung des Gasgemischs nachgeordnet ist eine weitere Hilfselektrode 24 vorzugsweise ebenfalls in doppelter Ausführung angeordnet. An der äußeren, dem Messgas unmittelbar zugewandten Seite der Festelektrolytschicht 11a befindet sich eine äußere Elektrode 22, die mit einer nicht dargestellten porösen Schutzschicht bedeckt sein kann.

Die Hilfselektroden 20, 24 bilden jeweils mit der äußeren Elektrode 22 zusammen elektrochemische Pumpzellen. Mittels der Pumpzellen wird ein jeweils konstanter Sauerstoffpartialdruck im inneren Gasraum 12 eingestellt. Zur Kontrolle des eingestellten Sauerstoftpartialdrucks ist mindestens eine der Hilfselektroden 20, 24 zusätzlich mit einer Referenzelektrode 30, die im Referenzgaskanal 18 angeordnet ist, zu einer sogenannten Nemst- bzw. Konzentrationszelle zusammengeschaltet. Dies ermöglicht einen direkten Vergleich des von der Sauerstoffkonzentration im inneren Gasraum 12 abhängigen Sauerstoffpotenzials der Hilfselektroden 20, 24 mit dem konstanten Sauerstoffpotenzial der Referenzelektrode 30 in Form einer messbaren elektrischen Spannung. Die Höhe der an den Pumpzellen anzulegenden Pumpspannungen wird so gewählt, dass sich zwischen den Elektroden 20, 30 bzw. 24, 30 der Konzentrationszellen eine konstante Spannung einstellt.

Darüber hinaus wird das an den ersten Hilfselektroden 20 anliegende Potenzial so gewählt, dass im Gasgemisch möglicherweise enthaltene Gase wie Stick- oder Schwefeloxide ebenfalls reduziert und somit aus dem Gasgemisch entfernt werden. Dies verringert die Gefahr einer Reaktion des zu bestimmenden Gases mit oxidierend wirkendenden Gasen innerhalb des Sensorelements.

Im inneren Gasraum 12 befindet sich weiterhin in Diffusionsrichtung des Gasgemischs den Hilfselektroden 20, 24 nachgeordnet eine Messelektrode 26, die vorzugsweise zusammen mit der Referenzelektrode 30 bzw. der äußeren Elektrode 22 eine weitere Pumpzelle bildet. Diese Pumpzelle 26, 30 bzw. 26, 22 dient dem Nachweis des zu bestimmenden Gases, wobei das zu bestimmende Gas an der Oberfläche der Messelektrode 26 gezielt oxidiert bzw. reduziert wird und dazu elektrochemisch Sauerstoff hinzu- oder abgepumpt wird. Als Maß für die Konzentration des zu bestimmenden Gases wird der zwischen Mess- und Referenzelektrode 26, 30 bzw. zwischen Messelektrode 26 und äußerer Elektrode 22 fließende Pumpstrom herangezogen.

Um zu gewährleisten, dass an den ersten Hilfselektroden 20 keine Zersetzung des zu bestimmenden Gases auftritt, kann das Potenzial an der ersten Hilfselektrode -200 bis -900 mV, insbesondere -400 bis -700 mV, betragen.

Erfindungsgemäß ist die Hilfselektrode in zwei elektrisch miteinander verbundene Bereiche unterteilt, die sich in Hinblick auf das ihnen zugrundeliegende Elektrodenmaterial und somit auch hinsichtlich ihrer katalytischen Aktivität unterscheiden. So kann beispielsweise ein erster Bereich der Hilfselektrode 20 aus einer Platin-Edelmetall-legierung, vorzugsweise aus einer Platin-Goldlegierung gefertigt sein und ein zweiter Bereich aus Platin. Erfindungsgemäß ist der erste Bereich in Strömungsrichtung des Gasgemischs vor dem zweiten Bereich angeordnet, so dass das Gasgemisch zunächst auf den katalytisch inaktiveren ersten Bereich der Hilfselektrode 20 trifft und danach in Kontakt mit dem katalytisch aktiveren zweiten Bereich. Als Bereich im Sinne dieser Anmeldung wird dabei ein prozentual nicht unbedeutender zusammenhängender Flächenanteil der Gesamtoberfläche definiert.

Die weitere Hilfselektrode 24 kann aus Platin oder einer Platin-Legierung, vorzugsweise einer Gold-Platinlegierung gefertigt sein. An der weiteren Hilfselektrode 24 erfolgt eine weitere Verringerung des Gehaltes an Sauerstoff bzw. Schwefel- oder Stickoxiden des Gasgemischs gegenüber dem bereits an der ersten Hilfselektrode 20 eingestellten Niveau. Weiterhin ermöglicht es das an der weiteren Hilfselektrode eingestellte Potenzial, dass im Gasgemisch enthaltener Wasserstoff zu Wasser bzw. enthaltenes Kohlenmonoxid zu Kohlendioxid oxidiert werden kann. Wasserstoff bzw. Kohlenmonoxid kann entweder bereits im zu messenden Gasgemisch enthalten sein oder aber an der ersten Hilfselektrode 20 durch das dort anliegende stark negative Potenzial entstehen. Durch die Entfernung des Wasserstoffs bzw. Kohlenmonoxids an der weiteren Hilfselektrode 24 wird vor allen Dingen eine genauere Bestimmung oxidierbarer Gase im Gasgemisch ermöglicht, da die Messung nicht durch schwankende Wasserstoff- bzw. Kohlenmonoxidgehalte im Gasgemisch verfälscht werden. Dazu wird an die weitere Hilfselektrode 24 ein Potenzial von - 350 bis - 500 mV angelegt.

Die Messelektrode 26 ist dagegen katalytisch aktiv ausgeführt und besteht beispielsweise aus Rhodium, einer Platin/Rhodium-Legierung oder einer sonstigen geeigneten Platinlegierung. Die äußere Elektrode 22 sowie die Referenzelektrode 30 bestehen ebenfalls aus einem katalytisch aktiven Material wie beispielsweise Platin. Das Elektrodenmaterial für alle Elektroden wird dabei in an sich bekannter Weise als Cermet eingesetzt, um mit den keramischen Folien zu versintern.

In den keramischen Grundkörper des Sensorelements 10 ist ferner zwischen zwei elektrischen Isolationsschichten 32, 33 ein Widerstandsheizer 35 eingebettet. Der Widerstandsheizer 35 dient dem Aufheizen des Sensorelements 10 auf die notwendige Betriebstemperatur von beispielsweise 600 bis 900°C.

Innerhalb des inneren Gasraums 12 ist in Diffusionsrichtung des Gasgemischs den ersten Hilfselektroden 20 eine poröse Diffusionsbarriere 19 vorgelagert. Die poröse Diffusionsbarriere 19 bildet einen Diffusionswiderstand bezüglich des zu den ersten Hilfselektroden 20 diffundierenden Gasgemischs aus. Im inneren Gasraum 12 kann zusätzlich eine weitere poröse Diffusionsbarriere zwischen der ersten Hilfselektrode 20 und der weiteren Hilfselektrode 24 vorgesehen sein, um die Einstellung von unterschiedlichen Sauerstoffkonzentrationen in verschiedenen Bereichen des inneren Gasraums 12 zu erreichen.

Vorzugsweise wird sowohl das Potenzial an der ersten Hilfselektrode 20 als auch das Potenzial an der weiteren Hilfselektrode 24 so gewählt, dass es an keiner der beiden Elektroden zu einer nennenswerten Zersetzung des zu bestimmenden Gases kommt.

Alternativ zu einer amperometrischen Bestimmung des zu messenden Gases mittels der Pumpzelle 26, 30 kann auch eine potentiometrische Bestimmung durchgeführt werden.

Die Messelektrode 26 wird dabei durch geeignete Platin-, Silber- und Palladiumlegierungen katalytisch inaktiv ausgeführt, sodass sich an deren Oberfläche ein Ungleichgewichtspotenzial einstellt, dessen Höhe direkt vom Gehalt an zu messendem Gas abhängig ist. Diese Betriebsweise eignet sich insbesondere für die Bestimmung von oxidierbaren Gasen. Das an der Messelektrode 26 sich einstellende Potenzial kann als messbare Spannung gegenüber dem konstanten Potenzial der Referenzelektrode 30 bestimmt werden.

Eine weitere Möglichkeit der Detektion des zu messenden Gases besteht in der Verwendung eines resistiven Messelements. Dabei ist im inneren Gasraum 12 eine weitere, nicht dargestellte Elektrode angeordnet, die über eine auf das zu messende Gas sensitive Schicht mit der Messelektrode 26 in Kontakt steht. Die Messelektrode 26 und die weitere Elektrode werden mit einer Spannung beaufschlagt und der Widerstand der gassensitiven Schicht zwischen den beiden Elektroden bestimmt.

## Patentansprüche

1. Sensorelement (10) eines Gassensors zur Bestimmung der Konzentration mindestens eines oxidierbaren Gases in einem Gasgemischs, insbesondere in Abgasen von Verbrennungsmotoren, umfassend zwei elektrochemische Pumpzellen (20, 22; 24, 22) und eine elektrochemische Messzelle (26, 30), die jeweils in Strömungsrichtung des Gasgemischs im inneren Gasraum (12) des Sensorelements eine erste Hilfselektrode (20), eine weitere Hilfselektrode (24) und eine Messelektrode (26) aufweisen, die in direktem Kontakt mit dem Gasgemisch stehen, wobei ein mittels der Messelektrode (26) generiertes Signal der Bestimmung der Konzentration des zu detektierenden Gases dient, und mit einer Referenzelektrode (30), **dadurch gekennzeichnet, dass** die erste Hilfselektrode (20) einen ersten, oberflächlichen Bereich aufweist, der mit einem zweiten, oberflächlichen Bereich elektrisch leitend verbunden ist, wobei sich beide oberflächlichen Bereiche hinsichtlich ihrer katalytischen Aktivität unterscheiden, und wobei der erste, katalytisch inaktivere Bereich in Strömungsrichtung des Gasgemischs vor dem zweiten, katalytisch aktiveren Bereich angeordnet ist, und dass die weitere Hilfselektrode (24) so ausgeführt ist, dass beim Anlegen eines entsprechenden Potentials der im Gasgemisch enthaltene Wasserstoff und/oder darin enthaltenes Kohlenmonoxid oxidiert und/oder die darin enthaltenen Stickoxide reduziert werden können.

2. Sensorelement nach Anspruch 1, wobei der erste, oberflächliche Bereich der ersten Hilfselektrode (20) aus einer Platin-Edelmetall-Legierung gefertigt ist, und dass der weitere oberflächliche Bereich des ersten Hilfselektrode (20) aus Platin besteht.

3. Abgasreinigungssystem für Verbrennungsmotoren, wobei ein Sensorelement nach einem der Ansprüche 1 oder 2 vorgesehen ist

4. Verfahren zur Bestimmung der Konzentration mindestens eines oxidierbaren Gases in einem Gasgemischs, insbesondere in Abgasen von Verbrennungsmotoren, mittels eines Sensorelements nach Anspruch 1 oder 2, wobei an der ersten elektrochemischen Pumpzelle (20, 22) das Potential so eingestellt wird, dass die Konzentration des im Gasgemisch enthaltenen Sauerstoffs auf einen ersten Wert eingestellt wird und im Gasgemisch enthaltene Stickoxide reduziert werden, wobei an der zweiten elektrochemischen Pumpzelle (24,22) das Potential so eingestellt wird, dass im Gasgemisch enthaltener Wasserstoff, und/oder darin enthaltenes Kohlenmonoxid oxidiert und/oder darin noch enthaltene Stickoxide reduziert werden, und dass in dem von Wasserstoff, Kohlenmonoxid und/oder Stickoxiden befreiten Gasgemisch mit der Messelektrode (26) die Konzentration des Gases ermittelt wird.

5. Verfahren nach Anspruch 4, wobei das zu bestimmende oxidierbare Gas an der Messelektrode (26) elektrochemisch oxidiert wird und der dabei fliessende Pumpstrom als Maß für die Konzentration an oxidierbarem Gas herangezogen wird.

6. Verfahren nach Anspruch 4 oder 5, wobei an der inneren Elektrode (24) der zweiten elektrochemischen Pumpzelle ein Potential zwischen -350mV und-500mV angelegt wird.

7. Verfahren nach Anspruch 4 bis 6, wobei an der inneren Elektrode (20) der ersten elektrochemischen Pumpzelle ein Potential zwischen -400mV und -70mV angelegt wird.

8. Verfahren nach Anspruch 4 bis 7, wobei der zu messende Bestandteil Ammoniak und/oder Kohlenwasserstoff ist.

## Claims

1. Sensor element (10) of a gas sensor for determining the concentration of at least one oxidizable gas in a gas mixture, in particular in exhaust gases of internal combustion engines, comprising two electrochemical pumping cells (20, 22; 24, 22) and an electrochemical measuring cell (26, 30), which in each case have in the direction of flow of the gas mixture in the inner gas space (12) of the sensor element a first supplementary electrode (20), a further supplementary electrode (24) and a measuring electrode (26), which are in direct contact with the gas mixture, a signal generated by means of the measuring electrode (26) serving for determining the concentration of the gas to be detected, and with a reference electrode (30), **characterized in that** the first supplementary electrode (20) has a first, superficial region, which is connected in an electrically conductive manner to a second, superficial region, the two superficial regions differing with regard to their catalytic activity, and the first, catalytically more inactive, region being arranged ahead of the second, catalytically more active, region in the direction of flow of the gas mixture, and **in that** the further supplementary electrode (24) is configured in such a way that, when a corresponding potential is applied, the hydrogen contained in the gas mixture and/or carbon monoxide contained therein can be oxidized and/or the nitrogen oxides contained therein can be reduced.

2. Sensor element according to Claim 1, the first, superficial region of the first supplementary electrode (20) being produced from a platinum/precious metal alloy, and in that the further superficial region of the first auxiliary electrode (20) consists of platinum.

3. Exhaust emission control system for internal combustion engines, a sensor element according to either of Claims 1 and 2 being provided.

4. Method for determining the concentration of at least one oxidizable gas in a gas mixture, in particular in exhaust gases of internal combustion engines, by means of a sensor element according to Claim 1 or 2, the potential being set at the first electrochemical pumping cell (20, 22) in such a way that the concentration of the oxygen contained in the gas mixture is set to a first value and nitrogen oxides contained in the gas mixture are reduced, the potential being set at the second electrochemical pumping cell (24, 22) in such a way that hydrogen contained in the gas mixture and/or carbon monoxide contained therein are oxidized and/or nitrogen oxides still contained therein are reduced, and in that the concentration of the gas in the gas mixture freed of hydrogen, carbon monoxide and/or nitrogen oxides is determined with the measuring electrode (26).

5. Method according to Claim 4, the oxidizable gas to be determined being electrochemically oxidized at the measuring electrode (26) and the pumping current thereby flowing being used as a measure of the concentration of oxidizable gas.

6. Method according to Claim 4 or 5, a potential of between -350 mV and -500 mV being applied to the inner electrode (24) of the second electrochemical pumping cell.

7. Method according to Claims 4 to 6, a potential of between -400 mV and -700 mV being applied to the inner electrode (20) of the first electrochemical pumping cell.

8. Method according to Claims 4 to 7, the constituent to be measured being ammonia and/or hydrocarbon.

## Revendications

1. Elément de détection (10) pour détecteur de gaz destiné à déterminer la concentration d'au moins un gaz oxydable dans un mélange de gaz, en particulier dans les gaz d'échappement de moteurs à combustion interne, comprenant:
deux cellules électrochimiques de pompage (20, 22; 24, 22) et une cellule électrochimique de mesure (26, 30), qui présentent toutes dans la direction d'écoulement du mélange de gaz dans l'espace interne (12) prévu pour le gaz dans l'élément de détection une première électrode auxiliaire (20), une autre électrode auxiliaire (24) et une électrode de mesure (26) en contact direct avec le mélange de gaz,
un signal produit au moyen de l'électrode de mesure (26) servant à déterminer la concentration du gaz à détecter,
et une électrode de référence (30),
**caractérisé en ce que**
une première partie de surface de la première électrode auxiliaire (20) est reliée de manière électriquement conductrice à une deuxième partie de surface,
**en ce que** les deux parties de surface ont des activités catalytiques différentes,
**en ce que** dans la direction d'écoulement du mélange de gaz, la première partie, catalytiquement inactive, est située en amont de la deuxième partie catalytiquement plus active et
**en ce que** l'autre électrode auxiliaire (24) est réalisée de manière à pouvoir par application d'un potentiel approprié oxyder l'hydrogène et/ou le monoxyde de carbone que contient le mélange de gaz et/ou réduire les oxydes d'azote que le mélange de gaz contient.

2. Elément de détection selon la revendication 1, dans lequel la première partie de surface de la première électrode auxiliaire (20) est réalisée en un alliage de platine et de métal précieux et en ce que l'autre partie de surface de la première électrode auxiliaire (20) est constituée de platine.

3. Système d'épuration des gaz d'échappement de moteurs à combustion interne dans lequel un élément de détection selon l'une des revendications 1 ou 2 est prévu.

4. Procédé de détermination de la concentration d'au moins un gaz oxydable dans un mélange de gaz, en particulier dans les gaz d'échappement de moteurs à combustion interne, au moyen d'un élément de détection selon les revendications 1 ou 2, dans lequel:
le potentiel appliqué sur la première cellule électrochimique de pompage (20, 22) est réglé de manière à ajuster la concentration de l'oxygène que contient le mélange de gaz à une première valeur et à réduire les oxydes d'azote que contient le mélange de gaz,
le potentiel appliqué sur la deuxième cellule électrochimique de pompage (24, 22) est réglé de telle sorte que l'hydrogène et/ou le monoxyde de carbone que le mélange de gaz contient soient oxydés et/ou que les oxydes d'azote que le mélange de gaz contient encore soient réduits et
en ce que la concentration du gaz est déterminée à l'aide d'électrodes de mesure (26) dans le mélange de gaz débarrassé de l'hydrogène, du monoxyde de carbone et/ou des oxydes d'azote.

5. Procédé selon la revendication 4, dans lequel le gaz oxydable à déterminer est oxydé électrochimiquement sur l'électrode de mesure (26) et en ce que le courant de pompage qui s'y écoule à cette occasion est utilisé comme mesure de la concentration en gaz oxydable.

6. Procédé selon les revendications 4 ou 5, dans lequel un potentiel compris entre - 350 mV et - 500 mV est appliqué sur l'électrode intérieure (24) de la deuxième cellule électrochimique de pompage.

7. Procédé selon les revendications 4 à 6, dans lequel un potentiel compris entre - 400 mV et - 700 mV est appliqué sur l'électrode intérieure (20) de la première cellule électrochimique de pompage.

8. Procédé selon les revendications 4 à 7, dans lequel le composant à mesurer est l'ammoniac et/ou un hydrocarbure.
